# EUROPÄISCHE PATENTSCHRIFT

(11) **EP 3 599 952 B1**
(45) Veröffentlichungstag und Bekanntmachung des Hinweises auf die Patenterteilung: **11.08.2021**
(21) Anmeldenummer: 18722383.9
(22) Anmeldetag: 26.03.2018
(51) Int. Cl.: A47J 29/02, G01N 33/08

(54) **VERFAHREN UND VORRICHTUNG ZUR ERMITTLUNG DES GARZUSTANDES BEIM GAREN VON EIERN**
METHOD AND DEVICE FOR DETERMINING THE COOKED STATE DURING THE COOKING OF EGGS
PROCÉDÉ ET DISPOSITIF PERMETTANT DE DÉTERMINER L'ÉTAT DE CUISSON LORS DE LA CUISSON D' UFS

(30) Priorität: 27.03.2017 DE 102017106512
(43) Veröffentlichungstag der Anmeldung: 05.02.2020
(73) Patentinhaber: EVONTA-Technology GmbH, 01109 Dresden (DE); Berghof, Reinhold, 08393 Dennheritz (DE)
(72) Erfinder: BERGHOF, Reinhold, 08393 Dennheritz (DE); FISCHER, Björn, 09212 Limbach-Oberfrohna (DE); MEISSNER, Sven, 09618 Brand-Erbisdorf (DE)
(74) Vertreter: Kailuweit & Uhlemann Patentanwälte Partnerschaft mbB
(86) Internationale Anmeldenummer: PCT/DE2018/000077
(87) Internationale Veröffentlichungsnummer: WO 2018/177451

(56) Entgegenhaltungen:
- DE-A1- 3 508 679
- DE-A1- 3 904 675

## Beschreibung

Die vorliegende Erfindung bezieht sich auf das Gebiet der Verfahrenstechnik und betrifft ein Verfahren und eine Vorrichtung zur Ermittlung des Garzustandes beim Garen von Eiern, wie sie beispielsweise als Eierkocher für das Garen von insbesondere Vogeleiern, wie beispielsweise von Hühnereiern, eingesetzt werden kann.

Das Kochen von Eiern ist ein alltäglicher Vorgang, der grundsätzlich nicht allzu kompliziert erscheint, jedoch bekanntermaßen immer wieder zu ungleichmäßigen Ergebnissen führt. In Abhängigkeit beispielsweise von der Größe und Ausgangstemperatur der Eier können unter gleichen Bedingungen unterschiedliche Endergebnisse des Garzustandes der Eier erreicht werden. Dies sind aber bekanntermaßen nur zwei der Parameter, die das Garen von Eiern und somit den erwünschten Gargrad beeinflussen können.

Üblicherweise erfolgt vor dem Garen der Eier ein Einstechen der Eier an der unteren, breiten Seite, dem stumpfen Pol eines Eies, der üblicherweise eine Luftkammer aufweist, danach werden die Eier in einen mit Wasser gefüllten Topf gegeben, so dass das Wasser die Eier bedeckt. Die Garzeit beginnt, wenn das Wasser kocht. Die Eier werden üblicherweise zwischen 3 bis 10 Minuten im kochenden Wasser belassen und anschließend unter kaltes Wasser gehalten, um den Garprozess zu stoppen. Üblicherweise gilt für Eier der Größe M eine Kochzeit von 4 bis 5 Minuten, wenn das Eigelb flüssig sein soll, für ein weiches Ei von 5 bis 6 Minuten, für ein wachsweiches Ei von 6 bis 8 Minuten und für ein hartgekochtes Ei von 8 bis 10 Minuten. Jedoch werden diese gewünschten Ergebnisse des Garzustandes nicht erreicht, wenn beispielsweise die Eier direkt aus dem Kühlschrank entnommen werden.

Die optimale Gartemperatur des Eigelbs liegt bei circa 65°C bis 70°C. Die cremige Konsistenz bleibt bei diesen Temperaturen erhalten. Wird das Ei hingegen länger oder bei zu hohen Temperaturen gegart, stellt sich eine mehlige Konsistenz ein.

Bekannt sind auch Eierkocher, die als Küchengeräte elektrisch betrieben werden. Ein elektrischer Eierkocher besteht in der Regel aus einem Heizgerät, in dem Wasser erhitzt wird, einem Eiaufsatz und einem Deckel, der an der Oberseite eine Öffnung aufweist, aus der Wasserdampf entweichen kann. Durch einen Drehschalter kann meist die Kochzeit eingestellt oder durch die zugegebene Wassermenge bestimmt werden. Auch hier werden die gewünschten Ergebnisse nicht erreicht, wenn beispielsweise unterschiedlich große Eier oder Eier aus dem Kühlschrank eingesetzt werden.

Bekannt sind ebenfalls Eierkocher, die für den Betrieb in der Mikrowelle vorgesehen sind, wobei das Ei in einem Gefäß positioniert wird und durch die Zugabe einer Wassermenge der Garzustand ähnlich wie bei den bekannten elektrischen Eierkochern reguliert werden soll und anschließend in der Mikrowelle für eine vorgegebene Zeit gegart wird.

Gemäß der Druckschrift DE 23 54 687 A1 ist ein Eierkocher mit wasserloser, elektrischer Wirkungsweise bekannt, bei dem in einem Tunnel oder in einem Gehäuse mit mindestens einem Tunnel Glühdrähte zwecks Eigarung angeordnet sind, wobei die Eier auf einem Schlitten in den Tunnel geschoben und bei Ablauf der über den Zeitschalter gewählten Gerinnungsdauer automatisch ausgefahren werden, wodurch ein Glockenton das tischfertige Ei anzeigt.

Eine Vorrichtung zum halbautomatischen und wasserlosen Kochen von Eiern mit einer Wärmequelle für eine Infrarot-Wärmestrahlung ist gemäß Druckschrift US 3 227 065 A bekannt.

Ein Eierkochapparat ist gemäß der Druckschrift WO 2006/087 537 A1 bekannt, der aus zwei einer Eierform angepassten Halbschalen aus Silikon besteht und mittels gekräuselt eingebrachten Heizdrähte erhitzt wird. Die Vorrichtung besitzt Sensoren zur Temperaturüberwachung, die die Kochzeit überwachen.

Gemäß der Druckschrift WO 2008/007 041 A1 ist ein Kochapparat aus zwei Teilen bekannt, wobei die Vorrichtung zum Kochen aus einem Behälter besteht, der eine Vielzahl an Heizelementen in Form von Halogenlampen in dem Behälter enthält, wobei diese Halogenlampen entlang des Kreisumfangs des Behälters angeordnet sind und sich das zu kochende Nahrungsmittel innerhalb der Halogenlampen befindet, und weiterhin ein Vorrichtungsteil vorhanden ist, welches die zu kochenden Nahrungsmittel trägt und das Kochen ohne Flüssigkeiten erfolgt. Bei dieser Vorrichtung lässt sich die Kochdauer individuell einstellen, jedoch wird nicht der Garzustand während des Kochprozesses überwacht.

Nachteilig an den bekannten Lösungen ist, dass die Garzeit von Eiern lediglich über die Zeit und/oder die Wassermenge reguliert wird. Weitere Eigenschaften von Eiern, die sich aus der Ausgangstemperatur, Größe und/oder die fortgeschrittene Lagerungszeit von Eiern ergeben und sich auf den Garvorgang und das gewünschte Garergebnis auswirken, werden bei den herkömmlichen Garmethoden nicht berücksichtigt. Weiterhin ist nachteilig, dass das Garen von Eiern mit Wasser oder Dampf immer auch vom Luftdruck abhängig ist und hinzukommt, dass durch Wasser oder Dampf auch Verschmutzungen und Restwasser in den Eierkochern verbleiben können, die zu unhygienischen Zuständen der Eierkocher führen können.

Durch die Druckschrift DE 35 08 679 A1 ist eine Vorrichtung zum Kochen von Eiern bekannt, wobei ein zu kochendes Ei während des Kochvorgangs durchleuchtet und der Kochvorgang nach Erreichen einer vorbestimmten Intensitätsabnahme der Transmissionsstrahlung einer Lichtquelle entsprechend einem gewünschten Kochzustand abgebrochen wird. Dazu dient eine Normkurve der Transmission des von der Lichtquelle abgegebenes Lichtes durch das zu kochende Ei in Abhängigkeit von der Kochzeit. Ein gewünschter Kochzustand in Abhängigkeit der Eigenschaften des aktuell zu kochenden Eies ist nicht erreichbar.

Die Druckschrift DE 39 04 675 A1 offenbart eine Verwendung einer optoelektronischen Anordnung zum Feststellen des Zustands von Eiern. Das zu untersuchende Ei befindet sich dabei zwischen einem Sendeelement und einem Empfangselement.

Ein elektrischer Eierkochautomat ist durch die Druckschrift DE 1 679 045 bekannt. Dieser besitzt ein Unterteil, ein mittels Scharnier daran befestigten Deckel und einem Bimetallschalter, der beim Erreichen einer bestimmten Temperatur des Heizstromkreis abschaltet. Dabei öffnet sich der Deckel selbsttätig mittels Federwirkung. Ein Garen entsprechend des Garzustands des Eies ist nicht vorgesehen.

Die Druckschrift DE 23 54 687 A1 beinhaltet einen Eierkocher mit einer wasserlosen elektrischen Wirkungsweise, der aus einem Gehäuse und mindestens einem zwecks Eiaufnahme eingerichteten Tunnel mit Glühdrähten, Wärmeregulator, Rasten und Zeitschalter besteht. Ein Garen entsprechend des Garzustands des Eies kann nicht erfolgen.

Der in den Patentansprüchen 1 und 9 angegebenen Erfindung liegt die Aufgabe zugrunde, ein Verfahren und eine Vorrichtung zur Ermittlung des Garzustandes beim Garen von Eiern so zu schaffen, dass insbesondere der Garzustand des Eies während des Garens überwacht und/oder der Garvorgang bei einem gewünschten Garzustandes des Eies beendet werden kann.

Diese Aufgabe wird mit den in den Patentansprüchen 1 und 9 aufgeführten Merkmalen gelöst.

Vorteilhafte Ausgestaltungen sind Gegenstand der abhängigen Ansprüche.

Die Verfahren und Vorrichtungen zur Ermittlung des Garzustandes beim Garen von Eiern zeichnen sich insbesondere dadurch aus, dass der Garzustand des Eies während des Garens überwachbar und/oder der Garvorgang bei einem gewünschten Garzustandes des Eies beendbar ist oder sind.

Die Aufgabe wird gelöst durch ein Verfahren zur Ermittlung des Garzustandes beim Garen von Eiern, bei dem wenigstens ein Ei in einem Gefäß positioniert wird, wobei mehrere gleiche oder unterschiedliche Eier in dem oder außerhalb des Gefäßes neben-, über- oder untereinander angeordnet sein können, nachfolgend das Gefäß geschlossen wird und mindestens innerhalb des Gefäßes die Temperatur erhöht und bis zum Erreichen des gewünschten Garzustandes des oder der Eier aufrechterhalten wird und dann das Ei abgekühlt wird, wobei zur Ermittlung des Garzustandes des oder der Eier im Gefäß mindestens eine Lichtquelle mit einer Wellenlänge jeweils einschließlich zwischen 400 nm und 1000 nm am oder in unmittelbarer Nähe des Eies oder jedes der Eier positioniert wird, von der Licht durch mindestens den einen Querschnitt des Eies zu einer Lichtmesseinrichtung gesandt wird, und die Transmission des Lichtes durch das Ei mindestens während des Garens ermittelt und zur Erreichung eines Garzustandes für ein flüssiges Eigelb eine Transmission von mindestens 96%, und zur Erreichung eines Garzustandes für ein weiches Eigelb eine Transmission von mindestens 94%, und zur Erreichung eines Garzustandes für ein wachsweiches Eigelb eine Transmission von mindestens 90%, und zur Erreichung eines Garzustandes für ein hartes Eigelb eine Transmission von mindestens 85% jeweils des maximalen Transmissionsgrades eines rohen Eies realisiert wird.

Vorteilhafterweise kann das Garen wasserlos durchgeführt werden.

Ebenfalls vorteilhafterweise kann als Gefäß ein transparentes Gefäß oder ein für Wellen im eingesetzten Wellenlängenbereich der Lichtquelle dichtes Gefäß eingesetzt werden.

Auch vorteilhafterweise kann eine Lichtquelle mit einer Wellenlänge jeweils einschließlich von 500 nm bis 1000 nm , vorzugsweise zwischen 500 nm und 650 nm, eingesetzt werden.

Weiter vorteilhafterweise kann ein Ei in dem Gefäß in einer Vorrichtung zum Garen einer Vielzahl von Eiern positioniert werden, so dass alle Eier in der Vorrichtung entsprechend dem Garzustand des Eies im Gefäß gegart werden können.

Vorteilhafterweise kann die Abkühlgeschwindigkeit des Eies von 100 K/s bis 10 K/s betragen.

Die Temperatur kann vorteilhafterweise bis zum Erreichen einer Transmission jeweils einschließlich von 96% bis 95% für den Garzustandes für ein flüssiges Eigelb eines Hühnereies, von 94% bis 92% für den Garzustandes für ein weiches Eigelb eines Hühnereies, von 91 % bis 90% für den Garzustandes für ein wachsweiches Eigelb eines Hühnereies oder von 89% bis 87% für den Garzustandes für ein harten Eigelb eines Hühnereies erhöht werden.

Eine Vorrichtung zur Ermittlung des Garzustandes beim Garen von Eiern weist mindestens ein Gefäß, eine Positioniereinrichtung für mindestens ein Ei in dem Gefäß und mindestens eine Energiequelle zur Temperaturerhöhung auf. Weiterhin ist mindestens eine Lichtquelle mit einer Wellenlänge jeweils einschließlich zwischen 400 nm und 1000 nm am oder in unmittelbarer Nähe des Eies positioniert. Darüber hinaus ist mindestens eine Lichtmesseinrichtung auf der gegenüberliegenden Seite der Lichtquelle zur Ermittlung der Transmission des Lichtes durch das Ei angeordnet, wobei das Ei mit mindestens einem Querschnitt zwischen Lichtquelle und Lichtmesseinrichtung positioniert ist. Die Lichtmesseinrichtung ist mit wenigstens einer Signaleinrichtung und/oder Anzeigeeinrichtung so verbunden, dass ein Garzustand für ein flüssiges Eigelb mit einer Transmission von mindestens 96%, ein Garzustand für ein weiches Eigelb mit einer Transmission von mindestens 94%, ein Garzustand für ein wachsweiches Eigelb mit einer Transmission von mindestens 90% und/oder ein Garzustand für ein hartes Eigelb mit einer Transmission von mindestens 85% jeweils des maximalen Transmissionsgrades eines rohen Eies signalisiert und/oder angezeigt wird.

Vorteilhafterweise kann die Lichtquelle eine Wellenlänge zwischen jeweils einschließlich 500 nm und 1000 nm, vorzugsweise zwischen jeweils einschließlich 500 nm und 650 nm, aufweisen.

Ebenfalls vorteilhafterweise kann als Lichtmesseinrichtung eine Photodiode, eine Fotozelle, ein Photodetektor, ein Fototransistor, ein CMOS-Bauelement oder ein CCD-Sensor eingesetzt werden.

Die Energiequelle kann vorteilhafterweise wenigstens ein elektrischer Heizdraht, eine induktive Heizeinrichtung, eine Quelle für elektromagnetische Wellen und/oder eine Anordnung zum Erwärmen von Wasser sein.

Das Gefäß kann insbesondere ein transparentes Gefäß oder ein für elektromagnetische Wellen des Wellenlängenbereiches jeweils einschließlich von 400 nm bis 1000 nm, vorzugsweise von 500 nm bis 1000 nm, dichtes Gefäß sein, wobei das Gefäß und/oder die Positioniereinrichtung aus Edelstahl, Silikon, Kunststoff und/oder Glas besteht.

Weiter vorteilhafterweise kann die Positioniereinrichtung ringförmig zur Aufnahme eines Eies ausgebildet sein, wobei der Durchmesser der ringförmigen Positioniereinrichtung geringer ist als der größte Durchmesser des Eies oder die Positioniereinrichtung ist mit drei oder mehr Auflagepunkten ausgebildet, wobei der Abstand der Auflagepunkte zueinander geringer ist als der größte Durchmesser des Eies.

Mit der erfindungsgemäßen Lösung wird ein Verfahren und eine Vorrichtung zur Ermittlung des Garzustandes beim Garen von Eiern angegeben, wobei insbesondere der Garzustand des Eies während des Garens überwacht und der Garvorgang bei einem gewünschten Garzustandes des Eies beendet werden kann.

Erreicht wird dies mit einem Verfahren und einer Vorrichtung zum Garen von Eiern, vorteilhafterweise Hühnereiern, bei dem mindestens ein Ei in einem Gefäß positioniert wird und dort die Transmission von elektromagnetischen Wellen einer Lichtquelle, die ebenfalls in dem Gefäß angeordnet ist, durch das Ei gemessen wird.

Dabei soll das Gefäß vorzugsweise im Wesentlichen dicht sein. Als "dicht" im Sinne der vorliegenden Erfindung soll verstanden werden, dass im Wesentlichen mindestens keine elektromagnetischen Wellen im Wellenlängenbereich der im Gefäß von der Lichtquelle ausgesandten elektromagnetischen Wellen in das Gefäß eindringen. Das Gefäß kann aber auch aus einem transparenten Material sein, wie vorzugsweise Glas und/oder Kunststoff oder auch aus einem lichtdichten Material bestehen, wie aus Metall, Edelstahl und/oder Kunststoff.

Es ist auch erfindungsgemäß möglich, dass mehrere gleiche oder unterschiedliche Eier in dem oder außerhalb des Gefäßes neben-, über- oder untereinander angeordnet sein können, und dann der Garzustand von jeweils dem oder den Eiern in dem oder den Gefäßen mit den Lichtquellen ermittelt wird. Befinden sich Eier einer Charge, das heißt hinsichtlich Typ, Alter, Herkunft, Größe und/oder Temperatur gleiche Eier, in einer Garvorrichtung, so ist die Ermittlung des Garzustandes eines Eies ausreichend für alle anderen Eier. Sind die Eier unterschiedlich in Größe und Alter so kann der Garzustand differieren und nicht nur über die Ermittlung des Garzustandes eines Eies bestimmt werden.

Nach dem Schließen des Gefäßes wird die Temperatur im Gefäß erhöht. Dies kann durch eine oder mehrere Energiequellen in oder außerhalb des Gefäßes erfolgen. Eine solche Energiequelle kann ein oder mehrere Heizdrähte, eine induktive Beheizung, eine Anordnung für das Erzeugen von elektromagnetischen Wellen und/oder eine Anordnung für das Erwärmen von Wasser sein. Die Temperatur wird solange erhöht, bis eine gewünschte Höchsttemperatur erreicht wird und nachfolgend kann die Temperatur auf dieser oder einer anderen Temperatur gehalten werden. Der Temperaturverlauf wird nach dem jeweils erreichten Garzustand des Eies bestimmt. Nachfolgend wird das Ei abgekühlt.

Das Ei im Gefäß kann auf einer Positioniereinrichtung, vorteilhafterweise einer ringförmigen Aufnahmeeinrichtung für das Ei positioniert sein, wobei der Durchmesser der ringförmigen Positioniereinrichtung geringer sein soll, als der größte Durchmesser des Eies, damit das Ei fest positioniert ist.

Vorteilhafterweise kann das Ei im direkten Kontakt mit einer Lichtquelle positioniert sein. Die Lichtquelle sendet dabei elektromagnetische Wellen im Wellenlängenbereich zwischen 400 nm und 1000 nm aus und die elektromagnetischen Wellen werden durch das Ei geführt und treffen dann auf eine Lichtmesseinrichtung, die die Transmission der elektromagnetischen Wellen misst. Entsprechend der Transmission der elektromagnetischen Wellen wird der Garzustand des Eies bestimmt.

Vorteilhafterweise kann die Lichtquelle eine Lumineszenzdiode (LED) sein.

Vorteilhafterweise kann die Transmission der Wellen durch den größten Querschnitt des Eies gemessen, wobei andere Querschnitte des Eies für die Messung auch möglich sind, dann aber die Kalibrierung der Transmissionswerte für den Garzustand des Eies angepasst werden muss. Die Lichtquelle als Anregung ist damit vorteilhafterweise an dem spitzen oder stumpfen Pol des Eies und die Lichtmessung als Detektion ist vorteilhafterweise an dem gegenüberliegenden, also dem stumpfen oder spitzen, Pol des Eies angeordnet. Vorteilhafterweise sollte die Transmission durch das Ei immer so realisiert werden, dass die Wellen mindestens durch das Eigelb transmittieren.

Eine Kalibrierung von Transmissionswerten bei Eiern unterschiedlicher Größe und Alter hat ergeben, dass bei der Transmission der Wellen zur Erreichung eines Garzustandes für ein flüssiges Eigelb eine Transmission von mindestens 96%, zur Erreichung eines Garzustandes für ein weiches Eigelb eine Transmission von mindestens 94%, zur Erreichung eines Garzustandes für ein wachsweiches Eigelb eine Transmission von mindestens 90%, und zur Erreichung eines Garzustandes für ein hartes Eigelb eine Transmission von mindestens 85% jeweils des maximalen Transmissionsgrades eines rohen Eies realisiert sein muss.

Vorteilhafterweise kann die Messung der Transmission während der gesamten Zeit des Garens bis zum Erreichen des gewünschten Garzustandes durchgeführt werden. Dabei kann quasi online der Garzustand des Eies überwacht werden. Möglich ist aber auch eine zeitlich unterbrochene Messung der Transmission, die auch über die Aufheizzeit gestaffelt unterschiedlich lange unterbrochen werden kann. So kann beispielsweise zu Beginn des Aufheizvorganges noch keine Messung durchgeführt werden und diese erst beginnen, wenn bekanntermaßen erst eine Garung des Eies überhaupt eingesetzt hat.

Mit der vorliegenden Erfindung ist es somit möglich, den gewünschten Garzustand eines Eies einzustellen und damit ein Ei mit einem flüssigen, weichen, mittelweichen oder harten Eigelb zu erhalten.

Die Lichtmesseinrichtung ist dazu mit wenigstens einer Signaleinrichtung und/oder Anzeigeeinrichtung so verbunden, dass ein Garzustand für ein flüssiges Eigelb mit einer Transmission von mindestens 96%, ein Garzustand für ein weiches Eigelb mit einer Transmission von mindestens 94%, ein Garzustand für ein wachsweiches Eigelb mit einer Transmission von mindestens 90% und/oder ein Garzustand für ein hartes Eigelb mit einer Transmission von mindestens 85% jeweils des maximalen Transmissionsgrades eines rohen Eies signalisiert und/oder angezeigt wird. Derartige Einrichtungen sind bekannt. Das kann über eine Steuereinrichtung erfolgen, in der Transmissionswerte und die ermittelten Transmissionswerte gespeichert sind. Der Vergleich mit den aktuell ermittelten Transmissionswerten und eine Ansteuerung der Signaleinrichtung und/oder Anzeigeeinrichtung kann auch mittels dieser Steuereinrichtung erfolgen, die so beispielsweise ein Datenverarbeitungssystem sein kann.

Vorteilhafterweise kann das Garen wasserlos erfolgen, womit vorteilhafterweise auch die Veränderung der Garzeit in Abhängigkeit von dem jeweils herrschenden Umgebungsdruck unabhängig ist.

Der Garvorgang wird in Abhängigkeit vom Ausgangszustand des individuellen Eies durchgeführt. Der Ausgangszustand eines Eies ist abhängig von Ausgangstemperatur, Größe und/oder der fortgeschrittenen Lagerungszeit des Eies. Die Lagerungszeit von Eiern ist deshalb für die Garung mit von Bedeutung, da das Eiklar neben Wasser auch mehrere Proteine enthält, die bei Temperaturen zwischen 62 °C und 83 °C denaturieren. Die mittlere Denaturierungstemperatur sinkt aber während der Lagerungszeit, da der pH-Wert der Eier aufgrund des Entweichens von natürlich eingelagertem Kohlendioxid steigt. Bei identischen Bedingungen in einem herkömmlichen Eierkocher führt das Kochen eines länger gelagerten Eies somit zwangsläufig zu einem anderen Ergebnis als bei einem frischen oder nur kurz gelagerten Ei. Dies ist besonders für den Fall zu beachten, dass Eier unterschiedlichen Alters gemeinsam gegart werden sollen. Dann kann der gewünschte Garzustand je Ei bei gleichem Garprozess differieren. Das Innere von länger gelagerten Eiern weist einen niedrigeren pH-Wert auf als das Innere von kurz gelagerten Eiern, so dass aufgrund des niedrigeren pH-Wertes die Transmission für den gewünschten Gargrad schneller erreicht wird und damit die Garzeit insgesamt entsprechend kürzer ist.

Dies trifft auch zu, wenn Eier deutlich unterschiedlicher Größe gleichzeitig gegart werden sollen. Auch hier kann der gewünschte Garzustand je Ei bei gleichem Garprozess differieren. Um diese unterschiedlichen Garzustände von mehreren Eiern zu vermeiden, ist es vorteilhaft, wenn jedes zu garende Ei in einer erfindungsgemäßen Vorrichtung gegart und dessen Garzustand überwacht wird.

An jedem Ei kann eine Lichtquelle und ein Lichtmesseinrichtung für den Garvorgang angeordnet sein. Wenn hingegen alle Eier aus der gleichen Charge sind und damit in Typ, Alter, Herkunft, Größe und/oder Temperatur übereinstimmen, kann ein "Referenzei" dafür dienen, den Gargrad für alle Eier zu bestimmen. Für diesen Fall ist es ausreichend, wenn an einem Ei eine Lichtquelle und eine Lichtmesseinrichtung angeordnet sind und mehrere Eier zeitgleich in einer erfindungsgemäßen Vorrichtung gegart werden.

Nachfolgend wird die Erfindung an mehreren Ausführungsbeispielen näher erläutert.

### Beispiel 1 (Wasserloses Garen eines Eies mit elektrischer Energiequelle)

Es soll ein wachsweiches Ei gegart werden.

Dazu wird ein Hühnerei in einem für Wellen des Wellenlängenbereiches von sichtbarem Licht im Wesentlichen dichten Gefäß positioniert und das Gefäß geschlossen. An dem stumpfen Pol des Eies ist eine Lichtquelle mit 600 nm positioniert, an dem spitzen Pol desselben Eies eine Fotodiode, die das Licht, das durch das Ei dringt, misst. Nun wird bei geschlossenem Gefäß die Transmission des Lichts am rohen Ei gemessen, diese entspricht 100%. Anschließend wird die Temperatur innerhalb des Gefäßes mittels einer Heizeinrichtung in dem Gefäß auf mindestens 100 °C erhöht und bis zum Erreichen einer Transmission von 94% gehalten. Durch diese Vorgehensweise wird der Garzustand des Eies während des Garens überwacht. Anschließend wird die Temperatur im Gefäß gesenkt, das Ei wird aus dem Gefäß entfernt und in einem Wasserbad abgekühlt, so dass der Garprozess gestoppt wird. Das Ei hat nun eine wachsweiche Konsistenz.

### Beispiel 2 (Wasserloses Garen von 4 Eiern mit Überwachung eines Eies durch eine elektrische Energiequelle)

Es sollen 4 Eier mit flüssigem Eigelb gegart werden.

Dazu werden die 4 Eier gleicher Größe und gleichen Alters in einem für Wellen des Wellenlängenbereiches von sichtbarem Licht in einem im Wesentlichen dichten Gefäß auf einer ringförmigen Positioniereinrichtung mit 4 ringförmigen Ausnehmungen positioniert und das Gefäß geschlossen. An dem spitzen Pol eines Eies ist eine Lichtquelle mit einer Wellenlänge von 800 nm positioniert, an dem stumpfen Pol desselben Eies ist eine Fotodiode positioniert, die das Licht, das durch das Ei dringt, misst. Nun wird bei geschlossenem Gefäß die Transmission des Lichts gemessen und entspricht 100%. Anschließend wird die Temperatur innerhalb des Gefäßes mittels einer Heizeinrichtung in dem Gefäß auf mindestens 100 °C erhöht und bis zum Erreichen einer Transmission von 96% gehalten. Durch diese Vorgehensweise wird der Garzustand des Eies während des Garens überwacht. Anschließend wird die Temperatur im Gefäß gesenkt, die Eier werden aus dem Gefäß entnommen und in einem Wasserbad abgekühlt, so dass der Garprozess gestoppt wird. Die 4 Eier weisen nun ein flüssiges Eigelb auf.

### Beispiel 3 (Garen eines Eies mit Wasser)

Es sollen 3 Eier mit hartem Eigelb gegart werden.

Dazu werden die 3 Eier gleicher Größe und gleichen Alters in einem für Wellen des Wellenlängenbereiches von sichtbarem Licht in einem im Wesentlichen dichten Gefäß auf einer ringförmigen Positioniereinrichtung mit 3 ringförmigen Ausnehmungen positioniert und das Gefäß geschlossen. An dem stumpfen Pol eines Eies ist eine Lichtquelle mit 500 nm positioniert, an dem spitzen Pol desselben Eies ist eine Fotodiode positioniert, die das Licht, das durch das Ei dringt, misst. Nun wird bei geschlossenem Gefäß die Transmission des Lichts gemessen und entspricht 100%. Anschließend wird die Temperatur innerhalb des Gefäßes mittels einer Heizeinrichtung und Wasser in dem Gefäß auf mindestens 100 °C erhöht und bis zum Erreichen einer Transmission von 85% gehalten. Durch diese Vorgehensweise wird der Garzustand des Eies während des Garens überwacht. Anschließend wird die Temperatur im Gefäß mit 100 K/min gesenkt, so dass der Garprozess gestoppt wird, die Eier werden aus dem Gefäß entnommen. Die 3 Eier weisen nun ein hartes Eigelb auf.

### Beispiel 4 (Garen eines Eies mit elektromagnetischen Wellen)

Es soll ein wachsweiches Ei gegart werden.

Dazu wird ein Hühnerei in einem für Licht mit einer Wellenlänge von 900 nm transparenten Gefäß auf einer Positioniereinrichtung mit drei Auflagepunkten positioniert und das Gefäß geschlossen. An dem stumpfen Pol ist eine Lichtquelle mit 900 nm positioniert, an dem spitzen Pol eine Fotodiode, die das Licht, das durch das Ei dringt, misst. Nun wird bei geschlossenem Gefäß die Transmission des Lichts gemessen und entspricht 100%. Anschließend wird die Temperatur innerhalb des Gefäßes mittels elektromagnetischer Wellen in dem Gefäß auf 100 °C erhöht und die erwärmte Luft in dem Gefäß mittels Ventilator im Wesentlichen gleichmäßig verteilt und bis zum Erreichen einer Transmission von 94% gehalten. Durch diese Vorgehensweise wird der Garzustand des Eies während des Garens überwacht. Anschließend wird die Temperatur im Gefäß mit 150 K/s gesenkt, so dass der Garprozess gestoppt wird, das Ei wird aus dem Gefäß entfernt. Das Ei hat nun eine wachsweiche Konsistenz.

Eine Vorrichtung zur Ermittlung des Garzustandes beim Garen von Eiern weist dazu mindestens ein Gefäß, eine Positioniereinrichtung für mindestens ein Ei in dem Gefäß und mindestens eine Energiequelle zur Temperaturerhöhung auf. Mindestens eine Lichtquelle mit einer Wellenlänge jeweils einschließlich zwischen 400 nm und 1000 nm ist am oder in unmittelbarer Nähe des Eies positioniert. Weiterhin ist mindestens eine Lichtmesseinrichtung auf der gegenüberliegenden Seite der Lichtquelle zur Ermittlung der Transmission des Lichtes durch das Ei angeordnet, wobei das Ei mit mindestens einem Querschnitt zwischen Lichtquelle und Lichtmesseinrichtung positioniert ist. Weiterhin ist die Lichtmesseinrichtung mit wenigstens einer Signaleinrichtung und/oder Anzeigeeinrichtung so verbunden, dass ein Garzustand für ein flüssiges Eigelb mit einer Transmission von mindestens 96%, ein Garzustand für ein weiches Eigelb mit einer Transmission von mindestens 94%, ein Garzustand für ein wachsweiches Eigelb mit einer Transmission von mindestens 90% und/oder ein Garzustand für ein hartes Eigelb mit einer Transmission von mindestens 85% jeweils des maximalen Transmissionsgrades eines rohen Eies signalisiert und/oder angezeigt wird.

## Patentansprüche

1. Verfahren zur Ermittlung des Garzustandes beim Garen von Eiern, bei dem wenigstens ein Ei in einem Gefäß positioniert wird, wobei mehrere gleiche oder unterschiedliche Eier in dem oder außerhalb des Gefäßes neben-, über- oder untereinander anordenbar sind, nachfolgend das Gefäß geschlossen wird und mindestens innerhalb des Gefäßes die Temperatur erhöht und bis zum Erreichen des gewünschten Garzustandes des oder der Eier aufrechterhalten wird und dann das Ei abgekühlt wird, wobei zur Ermittlung des Garzustandes des oder der Eier im Gefäß mindestens eine Lichtquelle mit einer Wellenlänge zwischen 400 nm und 1000 nm am Ei oder in unmittelbarer Nähe des Eies oder jedes der Eier positioniert wird, von der Licht durch mindestens den einen Querschnitt des Eies zu einer Lichtmesseinrichtung gesandt wird, und die Transmission des Lichtes durch das Ei mindestens während des Garens ermittelt und zur Erreichung eines Garzustandes für ein flüssiges Eigelb eine Transmission von mindestens 96%, und zur Erreichung eines Garzustandes für ein weiches Eigelb eine Transmission von mindestens 94%, und zur Erreichung eines Garzustandes für ein wachsweiches Eigelb eine Transmission von mindestens 90%, und zur Erreichung eines Garzustandes für ein hartes Eigelb eine Transmission von mindestens 85% jeweils des maximalen Transmissionsgrades eines rohen Eies realisiert wird.

2. Verfahren nach Patentanspruch 1, **dadurch gekennzeichnet, dass** die Transmission des Lichtes durch das Ei vor dem Garen ermittelt wird, wobei diese Transmission 100% ist.

3. Verfahren nach Patentanspruch 1 oder 2, **dadurch gekennzeichnet, dass** das Garen wasserlos durchgeführt wird.

4. Verfahren nach einem der Patentansprüche 1 bis 3, **dadurch gekennzeichnet, dass** als Gefäß ein transparentes Gefäß oder ein für Wellen im eingesetzten Wellenlängenbereich der Lichtquelle dichtes Gefäß eingesetzt wird.

5. Verfahren nach einem der Patentansprüche 1 bis 4, **dadurch gekennzeichnet, dass** eine Lichtquelle mit einer Wellenlänge jeweils einschließlich von 500 nm bis 1000 nm eingesetzt wird.

6. Verfahren nach einem der Patentansprüche 1 bis 5, **dadurch gekennzeichnet, dass** ein Ei in dem Gefäß in einer Vorrichtung zum Garen einer Vielzahl von Eiern positioniert wird und alle Eier in der Vorrichtung entsprechend dem Garzustand des Eies im Gefäß gegart werden.

7. Verfahren nach einem der Patentansprüche 1 bis 6, **dadurch gekennzeichnet, dass** die Abkühlgeschwindigkeit des Eies von 100 K/s bis 10 K/s beträgt.

8. Verfahren nach einem der Patentansprüche 1 bis 7, **dadurch gekennzeichnet, dass** die Temperatur bis zum Erreichen einer Transmission jeweils einschließlich von 96% bis 95% für den Garzustandes für ein flüssiges Eigelb eines Hühnereies, von 94% bis 92% für den Garzustandes für ein weiches Eigelb eines Hühnereies, von 91% bis 90% für den Garzustandes für ein wachsweiches Eigelb eines Hühnereies oder von 89% bis 87% für den Garzustandes für ein harten Eigelb eines Hühnereies erhöht wird.

9. Vorrichtung zur Ermittlung des Garzustandes beim Garen von Eiern mit mindestens einem Gefäß, einer Positioniereinrichtung für mindestens ein Ei in dem Gefäß, mindestens einer Energiequelle zur Temperaturerhöhung, wobei mindestens eine Lichtquelle mit einer Wellenlänge jeweils einschließlich zwischen 400 nm und 1000 nm am Ei oder in unmittelbarer Nähe des Eies positioniert ist, wobei mindestens eine Lichtmesseinrichtung auf der gegenüberliegenden Seite der Lichtquelle zur Ermittlung der Transmission des Lichtes durch das Ei angeordnet ist, wobei das Ei mit mindestens einem Querschnitt zwischen Lichtquelle und Lichtmesseinrichtung positioniert ist, und wobei die Lichtmesseinrichtung mit wenigstens einer Signaleinrichtung zur Signalisierung und/oder einer Anzeigeeinrichtung zur Anzeige verbunden ist, **dadurch gekennzeichnet, dass** die Signaleinrichtung ausgebildet ist zur Signalisierung und/oder die Anzeigeeinrichtung ausgebildet ist zur Anzeige
- eines Garzustands für ein flüssiges Eigelb mit einer Transmission von mindestens 96%,
- eines Garzustands für ein weiches Eigelb mit einer Transmission von mindestens 94%,
- eines Garzustands für ein wachsweiches Eigelb mit einer Transmission von mindestens 90% und/oder
- eines Garzustands für ein hartes Eigelb mit einer Transmission von mindestens 85% jeweils des maximalen Transmissionsgrades eines rohen Eies oder des Eies vor dem Garen, wobei diese Transmission 100%
ist.

10. Vorrichtung nach Patentanspruch 9, **dadurch gekennzeichnet, dass** die Lichtquelle eine Wellenlänge zwischen 500 nm und 1000 nm aufweist.

11. Vorrichtung nach Patentanspruch 9 oder 10, **dadurch gekennzeichnet, dass** die Lichtmesseinrichtung eine Photodiode, eine Fotozelle, ein Photodetektor, ein Fototransistor, ein CMOS-Sensor oder ein CCD-Sensor ist.

12. Vorrichtung nach einem der Patentansprüche 9 bis 11, **dadurch gekennzeichnet, dass** die Energiequelle wenigstens ein elektrischer Heizdraht, eine induktive Heizeinrichtung, eine Quelle für elektromagnetische Wellen und/oder eine Anordnung zum Erwärmen von Wasser ist.

13. Vorrichtung nach einem der Patentansprüche 9 bis 12, **dadurch gekennzeichnet, dass** das Gefäß ein transparentes Gefäß oder ein für elektromagnetische Wellen des Wellenlängenbereiches jeweils einschließlich von 400 nm bis 1000 nm dichtes Gefäß ist, wobei das Gefäß und/oder die Positioniereinrichtung aus Edelstahl, Silikon, Kunststoff und/oder Glas besteht.

14. Vorrichtung nach einem der Patentansprüche 9 bis 13, **dadurch gekennzeichnet, dass** die Positioniereinrichtung zur Aufnahme eines Eies ringförmig ausgebildet ist, wobei der Durchmesser der ringförmigen Positioniereinrichtung geringer ist als der größte Durchmesser des Eies oder die Positioniereinrichtung mit drei oder mehr Auflagepunkten ausgebildet ist, wobei der Abstand der Auflagepunkte zueinander geringer ist als der größte Durchmesser des Eies.

## Claims

1. Method for determining the cooking state when cooking eggs, in which method at least one egg is positioned in a vessel, wherein a plurality of identical or different eggs can be situated in or outside the vessel so as to be next to, above or below one another, the vessel is then closed and the temperature is increased, at least inside the vessel, and maintained until the desired cooking state of the egg(s) is reached, and then the egg is cooled, wherein, in order to determine the cooking state of the egg(s) in the vessel, at least one light source having a wavelength between 400 nm and 1000 nm is placed on the egg or in the immediate vicinity of the egg or each of the eggs, from which light source light is transmitted through at least one cross section of the egg to a light measuring device, and the transmission of the light through the egg is determined at least during cooking, and in order to achieve a cooking state for a runny egg yolk a transmission of at least 96%, and in order to achieve a cooking state for a soft egg yolk a transmission of at least 94%, and in order to achieve a cooking state for a medium soft egg yolk a transmission of at least 90%, and in order to achieve a cooking state for a hard egg yolk a transmission of at least 85% of the maximum transmission degree of a raw egg is achieved.

2. Method according to claim 1, **characterised in that** the transmission of the light through the egg is determined before cooking, this transmission being 100%.

3. Method according to either claim 1 or claim 2, **characterised in that** the cooking is carried out without water.

4. Method according to any of claims 1 to 3, **characterised in that** a transparent vessel or a vessel which is impenetrable to waves in the wavelength range of the light source used is used as the vessel.

5. Method according to any of claims 1 to 4, **characterised in that** a light source having a wavelength in each case of 500 nm to 1000 nm inclusive is used.

6. Method according to any of claims 1 to 5, **characterised in that** an egg is positioned in the vessel in a device for cooking a plurality of eggs and all eggs in the device are cooked according to the cooking state of the egg in the vessel.

7. Method according to any of claims 1 to 6, **characterised in that** the cooling rate of the egg is from 100 K/s to 10 K/s.

8. Method according to any of claims 1 to 7, **characterised in that** the temperature is increased until a transmission is achieved in each case of 96% to 95% inclusive for the cooking state for a runny egg yolk of a chicken egg, of 94% to 92% inclusive for the cooking state for a soft egg yolk of a chicken egg, of 91 % to 90% inclusive for the cooking state for a medium soft egg yolk of a chicken egg or of 89% to 87% inclusive for the cooking state for a hard egg yolk of a chicken egg.

9. Device for determining the cooking state when cooking eggs using at least a vessel, a positioning device for at least one egg in the vessel, at least one energy source for increasing the temperature, at least one light source having a wavelength in each case between 400 nm and 1000nm inclusive being positioned on the egg or in the immediate vicinity of the egg, at least one light measuring device being situated on the opposite side of the light source for determining the transmission of the light through the egg, the egg being positioned with at least one cross section between the light source and the light measuring device, and the light measuring device being connected to at least one signaling device for signaling and/or to a display device for displaying, **characterised in that** the signaling device is designed for signaling and/or the display device is designed for displaying
- a cooking state for a runny egg yolk having a transmission of at least 96%,
- a cooking state for a soft egg yolk having a transmission of at least 94%,
- a cooking state for a medium soft egg yolk having a transmission of at least 90% and/or
- a cooking state for a hard egg yolk having a transmission of at least 85% of the maximum transmission degree of a raw egg or of the egg before cooking, this transmission being 100%.

10. Device according to claim 9, **characterised in that** the light source has a wavelength between 500 nm and 1000 nm.

11. Device according to either claim 9 or claim 10, **characterised in that** the light measuring device is a photodiode, a photocell, a photodetector, a phototransistor, a CMOS sensor or a CCD sensor.

12. Device according to any of claims 9 to 11, **characterised in that** the energy source is at least one electric heating wire, an inductive heating device, a source for electromagnetic waves and/or an arrangement for heating water.

13. Device according to any of claims 9 to 12, **characterised in that** the vessel is a transparent vessel or a vessel which is impenetrable to electromagnetic waves in the wavelength range in each case of 400 nm to 1000 nm inclusive, the vessel and/or the positioning device being made of stainless steel, silicone, plastics and/or glass.

14. Device according to any of claims 9 to 13, **characterised in that** the positioning device for receiving an egg is annular, the diameter of the annular positioning device being smaller than the largest diameter of the egg, or the positioning device being formed having three or more contact points, the distance of the contact points from one another being smaller than the largest diameter of the egg.

## Revendications

1. Procédé de détermination de l'état de cuisson lors de la cuisson d'œufs, dans lequel au moins un œuf est positionné dans un récipient, plusieurs œufs identiques ou différents pouvant être disposés à l'intérieur ou à l'extérieur du récipient à côté, au-dessus ou au-dessous les uns des autres, le récipient étant ensuite fermé et la température étant augmentée au moins à l'intérieur du récipient et étant maintenue jusqu'à ce que l'état de cuisson souhaité de l'œuf ou des œufs soit atteint et l'œuf étant ensuite refroidi, au moins une source lumineuse d'une longueur d'onde comprise entre 400 nm et 1 000 nm étant positionnée sur l'œuf ou à proximité immédiate de l'œuf ou de chaque œuf afin de déterminer l'état de cuisson de l'œuf ou des œufs dans le récipient, de la lumière étant envoyée, à partir de ladite source lumineuse, à travers au moins l'une section transversale de l'œuf vers un système de mesure de lumière, et la transmission de la lumière à travers l'œuf étant déterminée au moins pendant la cuisson et, pour obtenir un état de cuisson pour un jaune d'œuf liquide, une transmission d'au moins 96 %, et, pour obtenir un état de cuisson pour un jaune d'œuf à la coque, une transmission d'au moins 94 %, et pour obtenir un état de cuisson pour un jaune d'œuf mollet, une transmission d'au moins 90 %, et pour obtenir un état de cuisson pour un jaune d'œuf dur, une transmission d'au moins 85 % respectivement de la transmittance maximale d'un œuf cru étant réalisée.

2. Procédé selon la revendication 1, **caractérisé en ce que** la transmission de la lumière à travers l'œuf est déterminée avant la cuisson, ladite transmission étant de 100 %.

3. Procédé selon la revendication 1 ou 2, **caractérisé en ce que** la cuisson est effectuée sans eau.

4. Procédé selon l'une des revendications 1 à 3, **caractérisé en ce qu'**un récipient transparent ou un récipient étanche aux ondes dans la plage de longueurs d'onde utilisée de la source lumineuse est utilisé comme récipient.

5. Procédé selon l'une des revendications 1 à 4, **caractérisé en ce qu'**une source lumineuse d'une longueur d'onde comprise respectivement entre 500 nm et 1 000 nm est utilisée.

6. Procédé selon l'une des revendications 1 à 5, **caractérisé en ce qu'**un œuf est placé dans le récipient dans un dispositif de cuisson d'une pluralité d'œufs et tous les œufs sont cuits dans le dispositif selon l'état de cuisson de l'œuf dans le récipient.

7. Procédé selon l'une des revendications 1 à 6, **caractérisé en ce que** la vitesse de refroidissement de l'œuf est située entre 100 K/s et 10 K/s.

8. Procédé selon l'une des revendications 1 à 7, **caractérisé en ce que** la température est augmentée jusqu'à l'obtention d'une transmission comprise respectivement entre 96 % et 95 % pour l'état de cuisson pour un jaune d'œuf liquide d'un œuf de poule, 94 % et 92 % pour l'état de cuisson pour un jaune d'œuf à la coque d'un œuf de poule, 91 % et 90 % pour l'état de cuisson pour un jaune d'œuf mollet d'un œuf de poule ou 89 % et 87 % pour l'état de cuisson pour un jaune dur d'un œuf de poule.

9. Dispositif de détermination de l'état de cuisson lors de la cuisson d'œufs, comportant au moins un récipient, un système de positionnement d'au moins un œuf dans le récipient, au moins une source d'énergie permettant d'augmenter la température, au moins une source lumineuse d'une longueur d'onde comprise respectivement entre 400 nm et 1 000 nm étant positionnée sur l'œuf ou à proximité immédiate de l'œuf, au moins un système de mesure de lumière étant disposé sur le côté opposé de la source lumineuse afin de déterminer la transmission de la lumière à travers l'œuf, l'œuf étant positionné, avec au moins une section transversale, entre la source lumineuse et le système de mesure de lumière,
et le système de mesure de lumière étant relié à au moins un système de signalisation pour la signalisation et/ou à un système d'affichage pour l'affichage, **caractérisé en ce que** le système de signalisation est conçu pour la signalisation et/ou le système d'affichage est conçu pour l'affichage
- d'un état de cuisson pour un jaune d'œuf liquide avec une transmission d'au moins 96 %,
- d'un état de cuisson pour un jaune d'œuf à la coque avec une transmission d'au moins 94 %,
- d'un état de cuisson pour un jaune d'œuf mollet avec une transmission d'au moins 90 % et/ou
- d'un état de cuisson pour un jaune d'œuf dur avec une transmission d'au moins 85 % respectivement de la transmittance maximale d'un œuf cru ou de l'œuf avant la cuisson, ladite transmission étant de 100 %.

10. Dispositif selon la revendication 9, **caractérisé en ce que** la source lumineuse présente une longueur d'onde comprise entre 500 nm et 1 000 nm.

11. Dispositif selon la revendication 9 ou 10, **caractérisé en ce que** le système de mesure de lumière est une photodiode, une cellule photoélectrique, un photodétecteur, un phototransistor, un capteur CMOS ou un capteur CCD.

12. Dispositif selon l'une des revendications 9 à 11, **caractérisé en ce que** la source d'énergie est au moins un fil chauffant électrique, un système de chauffage inductif, une source d'ondes électromagnétiques et/ou un ensemble de chauffage d'eau.

13. Dispositif selon l'une des revendications 9 à 12, **caractérisé en ce que** le récipient est un récipient transparent ou un récipient étanche aux ondes électromagnétiques dans la plage de longueurs d'onde comprise respectivement entre 400 nm et 1 000 nm, le récipient et/ou le système de positionnement étant en acier inoxydable, en silicone, en plastique et/ou en verre.

14. Dispositif selon l'une des revendications 9 à 13, **caractérisé en ce que** le système de positionnement permettant de recevoir un œuf est annulaire, le diamètre du système de positionnement annulaire étant inférieur au plus grand diamètre de l'œuf ou le système de positionnement étant conçu avec trois points d'appui ou plus, la distance entre les points d'appui étant inférieure au plus grand diamètre de l'œuf.
